# EUROPEAN PATENT SPECIFICATION

(11) **EP 0 574 974 B1**
(45) Date of publication and mention of the grant of the patent: **28.10.1998**
(21) Application number: 93201590.2
(22) Date of filing: 03.06.1993
(51) Int. Cl.: A23K 1/16, A23K 1/18

(54) **Feed, and method for optimizing the effect of the pigment in feed for salmonides**
Tierfutter und Verfahren zur Optimierung von Pigmenteffekten in Salmonidenfutter
Produit alimentaire pour animaux et procédé pour optimaliser l'effet du pigment dans l'aliment pour salmonides

(30) Priority: 15.06.1992 NO 922340
(43) Date of publication of application: 22.12.1993
(73) Proprietor: NORSK HYDRO ASA, 0240 Oslo (NO)
(72) Inventor: Rorvik, Kjell Arne, N-0583 Oslo (NO); Thomassen, Magny, N-0490 Oslo (NO)
(74) Representative: Bleukx, Luc

(56) References cited:
- EP-A- 0 458 380
- US-A- 4 239 782
- AQUACULTURE, vol.91, no.1/2, 1990, AMSTERDAM pages 153 - 162 B. BJERKING ET AL 'RESPONSE TO CAROTENOIDS BY RAINBOW TROUT IN THE SEA: RESORPTION AND METABOLISM OF DIETARY ASTAXANTHIN AND CANTHAXANTHIN'
- AQUACULTURE, vol.13, no.3, 1978, AMSTERDAM pages 213 - 224 J.SPINELLI AND C. MAHNKEN 'CAROTENOID DEPOSITION IN PEN-REARED SALMONIDS FED DIETS CONTAINING OIL EXTRACTS OF RED CRAB (P. PLANIPES)'

## Description

The present invention relates to a feed, and a method for optimizing the effect of the pigment in feed for salmonides, like salmon and rainbow trout.

For the aquaculture industry it has been an economic problem that farmed fish like salmon and trout do not naturally achieve the same strongly red colour as the wild species. Such farmed fish are palely red, if not large amounts of red pigments are artificially supplied, and therefor not as attractive as the wild fish to the costumer.

Today pigments like astaxanthin is added to the fish feed to make the fish meat more red.

Astaxanthin is a quite expensive compound. Addition of large amounts of this pigment to the feed, which will give just a small increase in the colour strength of the fish meat, will thus not be a good solution to the problem described above.

In addition, astaxanthin is a synthetic product, and large amounts of synthetic additives given to fish through the feed are not desirable.

Astaxanthin is also a rather unstable compound, which of course is a drawback.

During an experiment concerning the consequences of varying contents of the feed for the resistance against illness for the fish, it was surprisingly observed that fish that were fed with feed containing small amounts of iron had a stronger red colour than fish fed with feed containing more iron, even if the content of the red pigment astaxanthin in the feed was identical or even lower.

Analyses of these strong red coloured fish confirmed that the phenomena visually observed were in fact correct. The fact that the colour of the fish could be affected by other conditions and ingredients in the feed than just the pigments was very surprising, and the inventors then decided to perform additional experiments for possibly to confirm their hypothesis that reduced amounts of available iron in the feed was responsible for increasing the utilization factor of the pigments.

It is a main object of the invention to increase the utilization factor for pigments in fish feed through a reduction of content of bio-available iron.

It is another object of the present invention to provide a method for optimizing the effect of the pigment in feed for salmonides, made from a mixture of components containing proteins, lipids, carbohydrates and pigments in combination with one or more additional components; such as fillers, adhesives, preservatives, vitamins and minerals.

Still another object of the invention is to provide a feed for salmonides that gives enhanced effect of the pigment.

These and other objects are obtained in that the bio-available iron content is less than 150 mg/kg as defined in the accompanying claims 1-5.

A preferred feature by this invention is that the pigment used is astaxanthin and that the amount added of this pigment is less than 75 mg/kg dry feed.

An even more preferred feature by the invention is that the amount added of the pigment astaxanthin, is in the range from 65-40 mg/kg dry feed.

In the following the invention will be further explained by the examples and the attached illustrations Fig. 1-4. The examples are just meant to be illustrative and shall not be considered as limiting.

Fig. 1 shows a diagram of the connection between the red colour of salmon meat and iron content in the feed. Errors in the measuring, SEM, are marked on the diagram.

Fig. 2 shows a diagram of the connection between pigment content and iron content in the salmon meat.

Fig. 3 shows a diagram of the connection between iron content in salmon meat and iron content in blood of salmon.

Fig. 4 shows a diagram of the connection between iron content in blood of salmon and iron content in the feed. Errors in the measuring, SEM, are marked on the diagram.

Several experiments were performed to get more information about the effect of different types of fish feed containing different amounts of iron (45-310 mg/kg dry feed). Nine types of feed containing varying amounts of iron were examined and the amount of pigments in the form of astaxanthin were also carefully controlled.

Fish meal has proved to be especially well suited as a source of proteins in the feed. Analysis of commercial fish meal products show great variations in the iron content, normally from 140 to 300 mg total iron per kg meal. This is the main cause for the relatively high and varying content of iron in commercial fish feed products, where there are normal variations from 200 to 400 mg total iron per kg feed.

A reduction of the iron content of the feed to approximately 100 mg/kg can be done by selecting and using commercial fish meal products having a lowest possible content of iron. Additionally for mineral addition there must be used mineral blends without iron addition. This is a rather time consuming and economically costly method to make a fish meal based feed with a low iron content.

Due to the fact that an additional lowering of the iron content is necessary to obtain an optimized effect of the pigment, other ways for decreasing the iron content in the feed must be considered.

Addition of chelators is a way of decreasing the available iron content in the feed. Chelators are a common denomination for all substances which are able to form complexes with iron, and thereby to reduce the availability of the mineral. Use of chelators or inhibitors for iron absorbtion results in that a greater part of the iron being excreted without being absorbed. In our Norwegian patent application no. 920083 it is described how addition of the chelator trimethylamine oxide (TMAO), to the feed decreases the content of available iron much more than any prior known method.

In our Norwegian patent application no.902274 the synergetic effect between the available iron and omega-3 unsaturated fatty acids in fish are described. From the knowledge of this patent application it might be advantageous to add a dose of omega-3 unsaturated fatty acids to a feed containing such low iron content as described in the present invention.

### Example 1.

270 farmed salmons from 27 different net pens, fed different dietary levels of iron were analyzed.

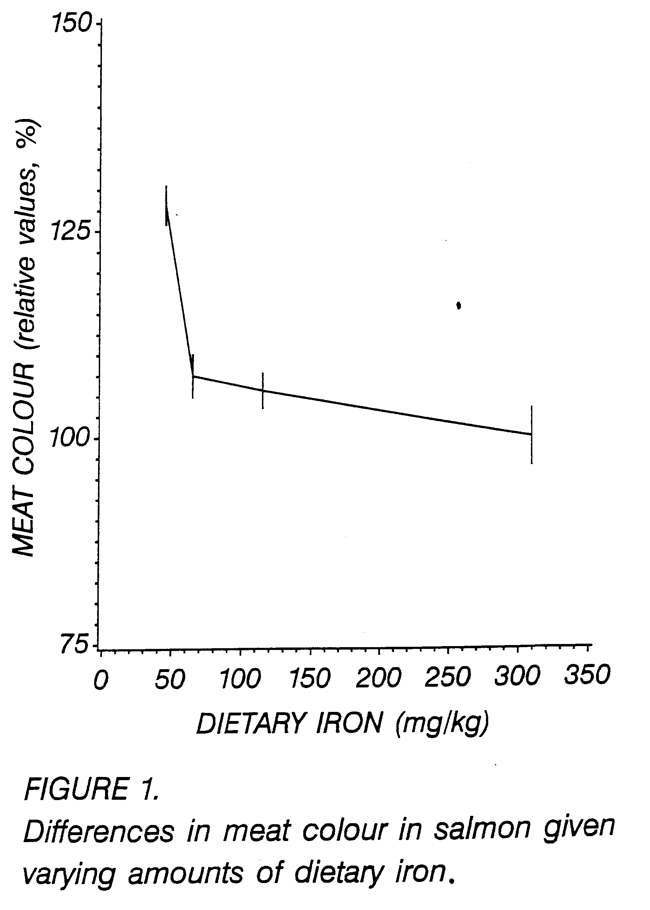

At the same day as the slaughtering of the salmons, chops were cut out in front of the dorsal fin of the salmons. The colour of this salmon meat was measured on a Minolta Chroma Meter. The results of this analysis are given in Fig. 1. The salmons showing the strongest red colour were those given 45 mg iron per kg feed.

Further, sensoric tests were performed on fresh salmon, salmon stored at -18 °C and -40 °C for 5 months, and smoked salmon. All these tests did show the strongest red colour for the salmons given the lowest iron content of 45 mg/kg in the feed.

### Example 2.

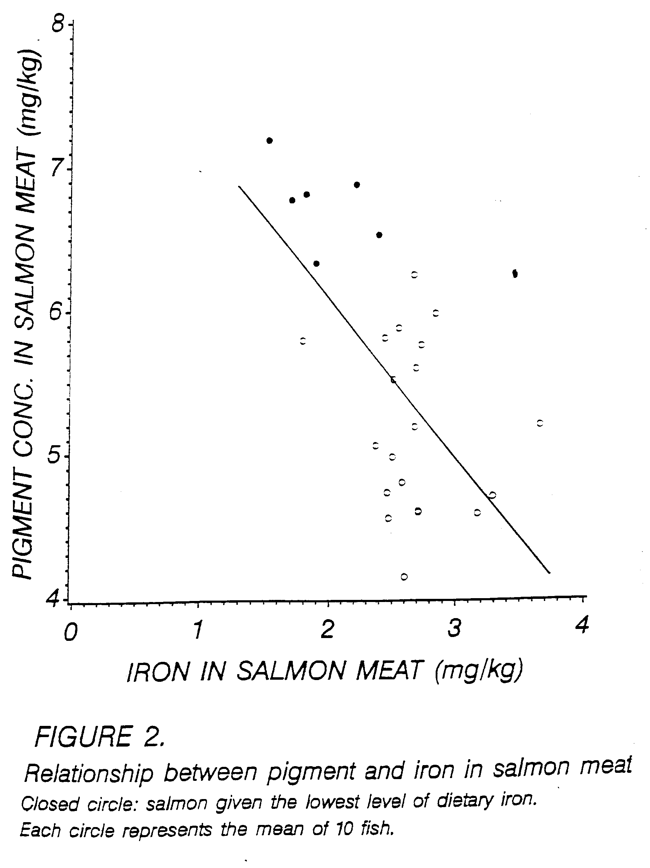

The connection between the content of iron and pigment in the salmon meat was examined on the same 270 farmed fishes as in example 1. The results from this analysis are shown in Fig. 2. There is a clear trend in the results that salmons having low iron content in their meat have high pigment content and vice versa. Fig. 2 also shows that all the salmons from the 6 net pens where the iron content in the feed used was the lowest (45 mg/kg), had a higher pigment content in the meat than salmons fed with any other types of feed.

### Example 3.

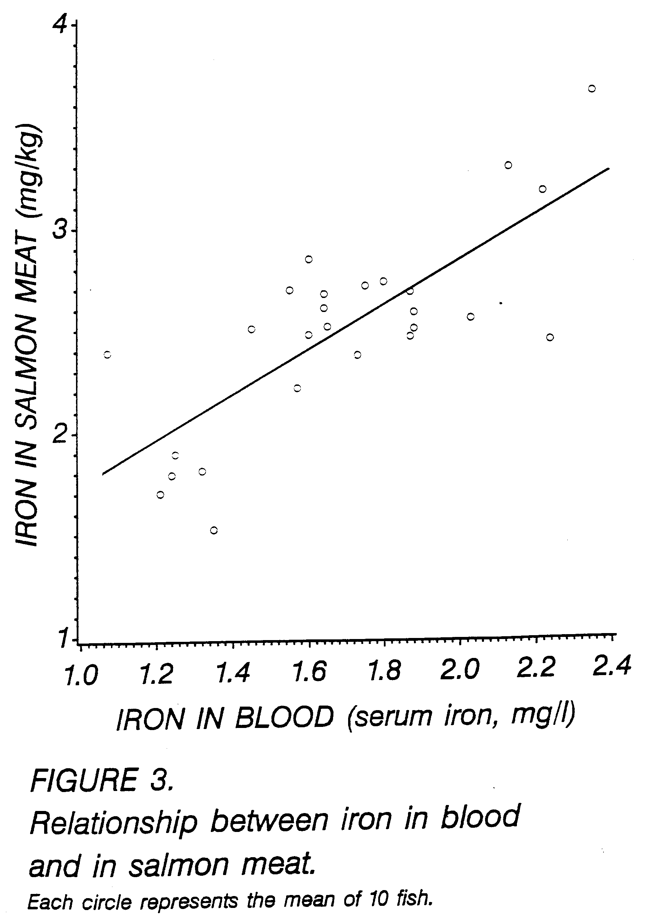

The correlation between the content of iron in the blood of the salmon and the salmon meat was analysed on the same fishes as in example 1. The results from this analysis are shown in Fig. 3. The tendency is clear; a salmon having low content of iron in the blood has low content of iron in the meat, and a salmon having high content of iron in the blood has high content of iron in the meat.

### Example 4.

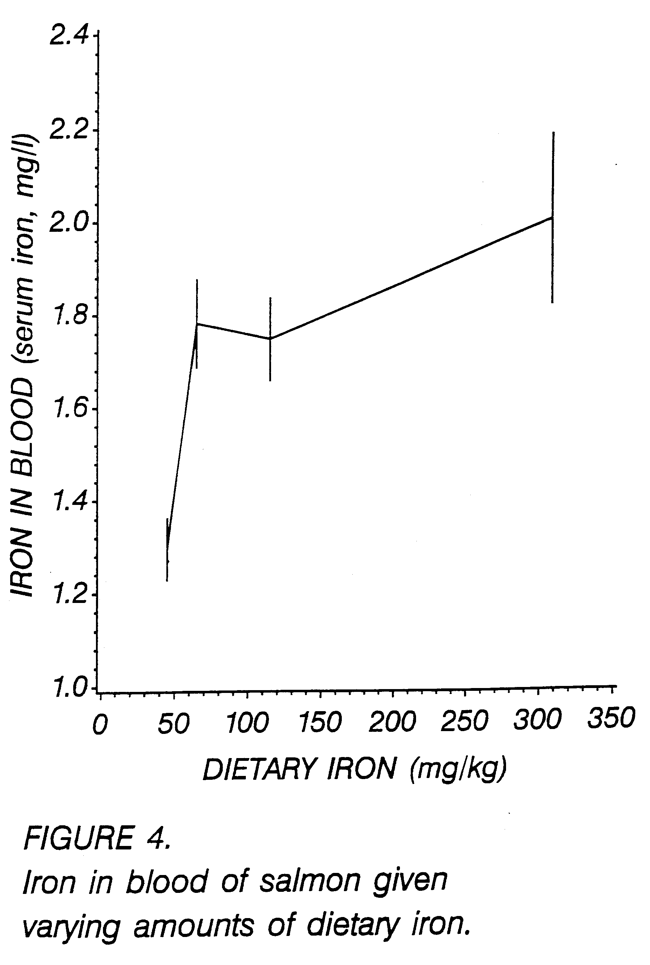

To make clear if the same tendency as in example 3 is the fact for the connection between the content of iron in feed and in blood, this relation was graphically presented in Fig. 4. Fig 4 shows however another connection where the iron content in the blood of the salmon is not much influenced of great variations in the iron content in the feed. Only when the iron level in the feed is very low, a marked drop in the curve takes place. This is because the salmons regulate the iron content in the blood by storing the excess in the liver.

As can be seen Fig. 1 and Fig. 4 are in inverse ratio. This observation indicates that low iron content in the blood of the salmon, and thereby in the muscles, is necessary to optimize the effect of the pigment added to the feed. From these experiments this effect seems to be especially noticeable when 65 mg iron per kg dry feed or a less content of iron is added.

Another surprising conclusion from these experiments is that salmons fed with 45 mg iron and 43 mg pigment per kg dry feed were considerably more red than salmons fed with 310 mg iron and 62 mg pigment per kg dry feed.

Thus according to the present invention it has been demonstrated that a low content of bio-available iron results in a substantial higher utilization of the pigment from the feed than with a normal iron content of from 200-400 mg per kg dry feed which gives an inferior colour even if the amount of colouring matter is significantly increased.

## Claims

1. Method for optimizing the effect of the pigment in feed for salmonides, made from a mixture of components containing proteins, lipids, carbohydrates and pigments in combination with one or more additional components; such as fillers, adhesives, preservatives, vitamins and minerals,
**characterized** in that
the bio-available iron content in the feed is controlled to be less than 150 mg/kg dry feed and that the pigment is added and distributed in the feed mixture.

2. Method according to claim 1,
**characterized** in that
the pigment is astaxanthin and that the amount added is less than 75 mg/kg dry feed.

3. Method according to claim 1 and 2,
**characterized** in that
the pigment astaxanthin, is preferentially added in an amount from 65-40 mg/kg dry feed.

4. Feed for salmonides, giving enhanced effect of the pigment, made from a mixture of components containing 300-600 parts by weight of proteins, 100-400 parts by weight of lipids, 150-300 parts by weight of carbohydrates, and pigments in combination with 50-100 parts by weight of one or more additional components; such as fillers, adhesives, preservatives, vitamins and minerals,
**characterized** in that
the bio-available iron content is less than 150 mg/kg and that the total amount of pigment is less than 75 mg/kg.

5. Feed, according to claim 4,
**characterized** in that
the pigment is astaxanthin and that the amount added is less than 75 mg/kg dry feed and preferentially from 65-40 mg/kg dry feed.

## Patentansprüche

1. Verfahren zur Optimierung des Pigmenteffektes in einem Salmonidenfutter, das hergestellt wird aus einer Mischung von Proteinen, Lipiden, Kohlehydraten und Pigmenten enthaltenden Bestandteilen in Kombination mit einer oder mehreren der zusätzlichen Komponenten wie zum Beispiel Füllstoffen, Bindemitteln, Konservierungsmitteln, Vitaminen und Mineralien, dadurch gekennzeichnet, daß der in biologischer Form vorrätige Eisengehalt in dem Futter so eingestellt wird, daß er geringer als 150 mg/kg trockenen Futters ist und daß das Pigment der Futtermischung zugeführt und in derselben verteilt wird.

2. Verfahren gemäß Anspruch 1, dadurch gekennzeichnet, daß das Pigment Astaxanthin ist und daß die zugesetzte Menge geringer als 75 mg/kg trockenen Futters ist.

3. Verfahren gemäß Anspruch 1 und 2, dadurch gekennzeichnet, daß das Astaxanthin als Pigment vorzugsweise in einer Menge zwischen 65 - 40 mg/kg trockenen Futters zugesetzt wird.

4. Salmonidenfutter, das einen verbesserten Pigmenteffekt abgibt und das hergestellt wird aus einer Mischung von Bestandteilen, die 300-600 Gewichtsteile an Proteinen, 100-400 Gewichtsteile an Lipiden, 150-300 Gewichtsteile an Kohlehydraten und Pigmente enthalten, in Kombination mit 50-100 Gewichtsteilen einer oder mehrerer zusätzlicher Komponenten, wie zum Beispiel Füllstoffen, Bindemitteln, Konservierungsmitteln, Vitaminen und Mineralien, dadurch gekennzeichnet, daß der in biologischer Form vorrätige Eisengehalt geringer als 150 mg/kg ist und daß der gesamte Anteil an Pigment geringer als 75 mg/kg ist.

5. Futter gemaß Anspruch 4, dadurch gekennzeichnet, daß das Pigment Astaxanthin ist und daß die zugesetzte Menge geringer als 75 mg/kg trockenen Futters ist und sich vorzugsweise aufzwischen 65-40 mg/kg trockenen Futters beläuft.

## Revendications

1. Procédé pour optimiser l'effet d'un pigment dans un aiment pour salmonidés, fabriqué à partir d'un mélange de composants contenant des protéines, des lipides, des hydrates de carbone et des pigments en combinaison avec un ou plusieurs composants supplémentaires; tels que des matières de remplissage, des agglutinants, des agents préservatifs, des vitamines et des minéraux, caractérisé en ce que la teneur en fer disponible sous forme biologique dans l'aiment est réglée pour être inférieure à 150 mg/kg d'aiment sec et en ce que le pigment est ajouté et réparti dans le mélange alimentaire.

2. Procédé selon la revendication 1, caractérisé en ce que le pigment est de l'astaxanthine et que la quantité ajoutée est inférieure à 75 mg/kg d'aiment sec.

3. Procédé selon les revendications 1 et 2, caractérisé en ce que le pigment astaxanthine est de préférence ajouté dans une quantité comprise entre 65 et 40 mg/kg d'aliment sec.

4. Aiment pour salmonidés, donnant un effet de pigmentation renforcé, fabriqué à partir d'un mélange de composants contenant 300-600 parties en poids de protéines, 100-400 parties en poids de lipides, 150-300 parties en poids d'hydrates de carbone et des pigments en combinaison avec 50-100 parties en poids d'un ou de plusieurs composants supplémentaires; tels que des matières de remplissage, des agglutinants, des agents préservatifs, des vitamines et des minéraux, caractérisé en ce que la teneur en fer disponible sous forme biologique est inférieure à 150 mg/kg et en ce que la quantité totale de pigment est inférieure à 75 mg/kg.

5. Aliment selon la revendication 4, caractérisé en ce que le pigment est de l'astaxanthine et en ce que la quantité ajoutée est inférieure à 75 mg/kg d'aliment sec et de préférence comprise entre 65 et 40 mg/kg d'aliment sec.
